# EUROPÄISCHE PATENTSCHRIFT

(11) **EP 3 615 792 B1**
(45) Veröffentlichungstag und Bekanntmachung des Hinweises auf die Patenterteilung: **31.07.2024**
(21) Anmeldenummer: 18719569.8
(22) Anmeldetag: 24.04.2018
(51) Int. Cl.: F03D 80/40, F03D 80/30

(54) **WINDENERGIEANLAGEN-ROTORBLATT UND VERFAHREN ZUM HERSTELLEN EINES WINDENERGIEANLAGEN-ROTORBLATTES**
WIND-TURBINE ROTOR BLADE AND METHOD FOR PRODUCING A WIND-TURBINE ROTOR BLADE
PALE DE ROTOR D'ÉOLIENNE ET PROCÉDÉ DE FABRICATION D'UNE PALE DE ROTOR D'ÉOLIENNE

(30) Priorität: 25.04.2017 DE 102017108818
(43) Veröffentlichungstag der Anmeldung: 04.03.2020
(73) Patentinhaber: Wobben Properties GmbH, 26607 Aurich (DE)
(72) Erfinder: VINKE, Daniel, 26607 Aurich (DE)
(74) Vertreter: Eisenführ Speiser
(86) Internationale Anmeldenummer: PCT/EP2018/060445
(87) Internationale Veröffentlichungsnummer: WO 2018/197472

(56) Entgegenhaltungen:
- EP-A1- 2 826 993
- WO-A1-2011/080177
- WO-A2-2013/004888
- CN-A- 105 221 358
- US-A1- 2009 227 162

## Beschreibung

Die vorliegende Erfindung betrifft ein Windenergieanlagen-Rotorblatt sowie ein Verfahren zum Herstellen eins Windenergieanlagen-Rotorblattes.

Rotorblätter einer Windenergieanlage sind in vielen verschiedenen Formen bekannt. Auf Grund der Höhe einer Gondel der Windenergieanlage und der Länge der Rotorblätter müssen die Rotorblätter der Windenergieanlagen den Blitzschutzanforderungen entsprechen.

In der prioritätsbegründenden deutschen Patentanmeldung hat das Deutsche Patent- und Markenamt die folgenden Dokumente recherchiert: DE 20 2013 007 659 U1, EP 1 187 988 B1 und EP 2 806 160 A1. Weiterer Stand der Technik ist aus EP 2 826 993 A1 bekannt. Z

Es ist daher eine Aufgabe der vorliegenden Erfindung, ein Windenergieanlagen-Rotorblatt mit einem verbesserten Blitzschutz vorzusehen.

Diese Aufgabe wird durch ein Windenergieanlagen-Rotorblatt nach Anspruch 1 sowie durch ein Verfahren zum Herstellen eines Windenergieanlagen-Rotorblattes nach Anspruch 4 gelöst.

Somit wird ein Windenergieanlagen-Rotorblatt vorgesehen, welches eine Rotorblattwurzel und eine Rotorblattspitze aufweist. Das Rotorblatt weist ein Blitzschutzsystem mit einem Blitzschutzleiter auf, welcher eine galvanische Verbindung mit dem Rotorblattwurzelbereich aufweist. Das Blitzschutzsystem weist einen Bereich der Rotorblattoberfläche auf, auf welchem eine Heizbeschichtung in Form eines Heizlackes aufgetragen ist, wobei dieser Bereich galvanisch mit dem Blitzschutzleiter gekoppelt ist, so dass ein Blitz, der in den Heizlack einschlägt, entsprechend abgeleitet werden kann.

Gemäß einem Aspekt der vorliegenden Erfindung weist das Windenergieanlagen-Rotorblatt mindestens einen Blitzrezeptor auf, welcher ebenfalls mit dem Blitzschutzleiter galvanisch gekoppelt ist. Hierbei ist der Bereich um den mindestens einen Blitzschutzleiter mit Heizlack versehen. Mit anderen Worten, die Oberfläche um den Blitzrezeptor herum weist einen Heizlack auf. Der Heizlack dient dazu, den eingeschlagenen Blitz zu den Blitzrezeptoren zu leiten, um eine Beschädigung der Oberfläche insbesondere im Bereich der Blitzrezeptoren zu vermeiden.

Gemäß der vorliegenden Erfindung weist der Heizlack Kohlenstoff-Nanomaterialien und Graphit auf.

Gemäß einem Aspekt der vorliegenden Erfindung kann die Oberfläche des Rotorblattes mit dem erfindungsgemäßen Heizlack versehen werden, um die Oberfläche des Rotorblattes zu schützen. Damit können nichtleitende Teile des Rotorblattes in das Blitzschutzsystem integriert werden.

Gemäß einem Aspekt der vorliegenden Erfindung kann der Heizlack auch nachträglich auf die Oberfläche des Rotorblattes zumindest teilweise aufgetragen werden, um ein bereits bestehendes Blitzschutzsystem weiter zu verbessern.

Gemäß einem Aspekt der vorliegenden Erfindung kann der aufgetragene Heizlack beispielsweise über die Blitzschutzrezeptoren an das Blitzschutzsystem angebunden werden.

Die Heizbeschichtung kann als Streifen zwischen der Rotorblattspitze und der Rotorblattwurzel vorgesehen sein. Die Heizbeschichtung kann im Bereich der Rotorblattwurzel mit dem Rest des Blitzschutzsystems gekoppelt werden.

Die vorliegende Erfindung betrifft ebenfalls ein Verfahren zum Herstellen eines Windenergieanlagen-Rotorblattes, Das Rotorblatt wird aus einem Faserverbundmaterial hergestellt und ein Blitzschutzsystem wird integriert. Hierbei wird insbesondere ein Blitzableiter im Inneren des Rotorblattes vorgesehen. Auf der Oberfläche des Rotorblattes wird ein Heizlack als Teil des Blitzschutzsystems aufgetragen und galvanisch mit dem Blitzschutzleiter verbunden.

Die vorliegende Erfindung betrifft ebenfalls die Verwendung eines Heizlackes oder einer Heizbeschichtung als Teil eines Blitzschutzsystems eines Windenergieanlagen-Rotorblattes.

Gemäß der Erfindung wird eine Heizbeschichtung auf Acrylbasis für den Einsatz bis 100°C vorgesehen, welche Kohlenstoff-Nanomaterialien und Graphit aufweist.

Die Dicke des Heizlackes kann zwischen 40 µm und 1 mm betragen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung, und
- Fig. 2: zeigt eine schematische Darstellung eines Windenergieanlagen-Rotor-blattes gemäß der Erfindung.

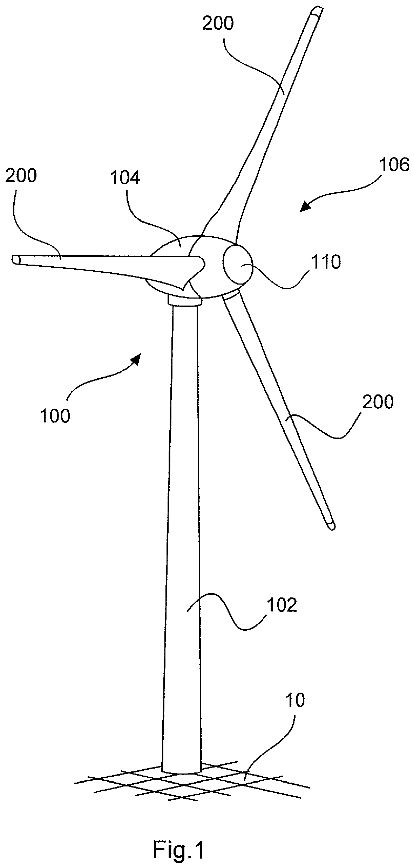

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln 108b der jeweiligen Rotorblätter 200 verändert werden.

Die Windenergieanlage weist ferner ein Blitzschutzsystem auf, welches gewährleistet, dass ein Blitz, der in eines der drei Rotorblätter 200 einschlägt, entsprechend abgeleitet wird. Dazu wird ein Blitzableiter im Inneren des Rotorblattes sowie eine weitere Blitzableitung im Inneren der Windenergieanlage vorgesehen.

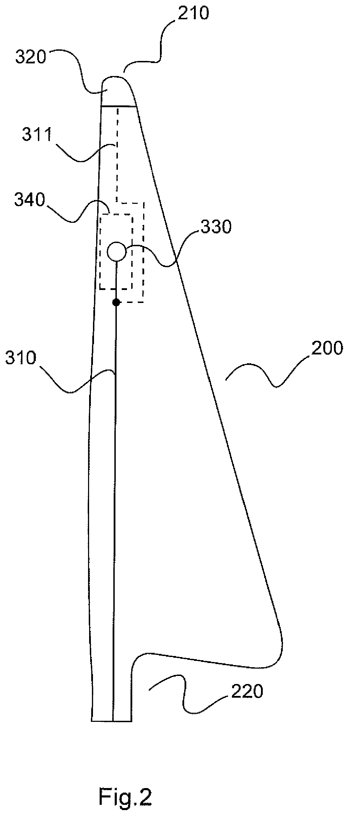

Fig. 2 zeigt eine schematische Darstellung eines Windenergieanlagen-Rotorblattes gemäß der Erfindung. In Fig. 2 ist ein Rotorblatt 200 mit einer Rotorblattspitze 210 und einer Rotorblattwurzel 220 gezeigt. Das Rotorblatt weist ein Blitzschutzsystem 300 auf. Das Blitzschutzsystem 300 weist insbesondere einen Blitzschutzleiter 310 z. B. im Inneren des Rotorblattes sowie optional mindestens einen Blitzrezeptor 330 auf. Die Rotorblattspitze 210 kann optional einen weiteren Blitzrezeptor 320 aufweisen, welcher mittels einer Blitzschutzleitung 311 mit dem Blitzschutzleiter 310 galvanisch gekoppelt ist. Das Blitzschutzsystem 300 weist ferner einen Heizlack bzw. eine Heizbeschichtung 340 auf der Oberfläche des Rotorblattes auf. Diese Heizbeschichtung 340 ist galvanisch mit dem Blitzschutzleiter 310 gekoppelt, um einen einschlagenden Blitz entsprechend ableiten zu können.

Gemäß einem Aspekt der vorliegenden Erfindung ist die Heizbeschichtung bzw. der Heizlack 340 im Bereich eines Blitzrezeptors 330 vorgesehen. Mittels des Blitzrezeptors erfolgt dann auch die galvanische Kopplung der Heizbeschichtung 340 mit dem Blitzschutzleiter 310.

Die Heizbeschichtung bzw. der Heizlack kann auf einer Acrylatbasis hergestellt sein und kann Kohlenstoff-Nanomaterialien und Graphit enthalten.

Ein Beispiel eines derartigen Heizlackes ist der Heizlack: Carbo e-Therm ACR-100 1W. Die Dichte dieses Lackes beträgt 1,08 g/cm³. Die Farbe kann Anthrazit sein. Der Feststoffgehalt beträgt 39 - 41 % (Kohlenstoff + Polymer). Die Lagerbeständigkeit beträgt 6 Monate. Die Lösemittelbasis ist Wasser. Die Mindest-Filmbildetemperatur beträgt ca. 14°C. Der pH-Wert ist ca. 7 - 8. Die Viskosität (Scherrate 100s⁻¹) beträgt 700 - 800mPas.

Die Produkteigenschaften der getrockneten Schicht sind wie folgt: Temperatureinsatzbereich -18°C bis 100°C; spezifischer Widerstand: 1050 - 1100 Ωµm; Schichtwiderstand: Rlsquare ab 5,5 Ω (bei 200µm Schichtdicke); empfohlene Mindestschichtdicke: 40 µm.

Die Dicke des Lackes beträgt zwischen 30 µm und 2 mm, vorzugsweise zwischen 40 µm und 1 mm.

## Patentansprüche

1. Windenergieanlagen-Rotorblatt (200), mit
einer Rotorblattspitze (210) und einer Rotorblattwurzel (220) sowie einem Blitzschutzsystem (300),
wobei das Blitzschutzsystem (300) einen Blitzschutzleiter (310) und eine Heizbeschichtung (340) in Form eines Lackes auf der Oberfläche des Rotorblattes (200) aufweist, wobei die Heizbeschichtung (340) galvanisch mit dem Blitzschutzleiter (310) gekoppelt ist,
wobei die Heizbeschichtung (340) auf einer Acrylatbasis basiert und Kohlenstoff-Nanomaterialien und Graphit aufweist.

2. Windenergieanlagen-Rotorblatt (200) nach Anspruch 1, ferner mit
mindestens einem Blitzrezeptor (330),
wobei die Heizbeschichtung (340) im Bereich des Blitzrezeptors (330) vorgesehen ist und die Heizbeschichtung (340) mittels des Blitzrezeptors (330) galvanisch mit dem Blitzschutzleiter (310) gekoppelt ist.

3. Windenergieanlagen-Rotorblatt (200) nach einem der Ansprüche 1 bis 2, wobei
die Dicke des Lackes zwischen 30 µm und 2 mm, insbesondere zwischen 40 µm und 1 mm beträgt.

4. Verfahren zum Herstellen eines Windenergieanlagen-Rotorblattes (200), mit den Schritten:
Herstellen einer Schale des Windenergieanlagen-Rotorblattes aus einem Faserverbundmaterial,
Vorsehen mindestens eines Blitzschutzleiters (310),
Aufbringen einer Heizbeschichtung (340) in Form eines Lackes auf einer Oberfläche des Windenergieanlagen-Rotorblattes und
galvanisches Koppeln der Heizbeschichtung (340) mit dem mindestens einen Blitzschutzleiter (310),
wobei die Heizbeschichtung (340) auf einer Acrylatbasis basiert und Kohlenstoff-Nanomaterialien und Graphit aufweist.

5. Verwendung einer Heizbeschichtung als Teil eines Blitzschutzsystems eines Windenergieanlagen-Rotorblattes, wobei die Heizbeschichtung in Form eines Lackes auf eine Oberfläche des Windenergieanlagen-Rotorblattes aufgebracht ist und galvanisch mit einem Blitzschutzleiter gekoppelt ist,
wobei die Heizbeschichtung (340) auf einer Acrylatbasis basiert und Kohlenstoff-Nanomaterialien und Graphit aufweist.

## Claims

1. A wind turbine rotor blade (200) comprising
a rotor blade tip (210) and a rotor blade root (220) as well as a lightning protection system (300),
wherein the lightning protection system (300) has a lightning protection conductor (310) and a heatable coating (340) in the form of a paint on the surface of the rotor blade (200), wherein the heatable coating (340) is galvanically coupled to the lightning protection conductor (310),
wherein the heatable coating (340) is based on an acrylate basis and has carbon nanomaterials and graphite.

2. A wind turbine rotor blade (200) according to claim 1 and further comprising
at least one lightning receptor (330),
wherein the heatable coating (340) is provided in the region of the lightning receptor (330) and the heatable coating (340) is galvanically coupled to the lightning protection conductor (310) by means of the lightning receptor (330).

3. A wind turbine rotor blade (200) according to one of claims 1 to 2 wherein
the thickness of the paint is between 30 µm and 2 mm, in particular between 40 µm and 1 mm.

4. A method of producing a wind turbine rotor blade (200) comprising the steps:
producing a shell of the wind turbine rotor blade from a fibre composite material,
providing at least one lightning protection conductor (310),
applying a heatable coating (340) in the form of a paint on a surface of the wind turbine rotor blade, and
galvanically coupling the heatable coating (340) to the at least one lightning protection conductor (310),
wherein the heatable coating (340) is based on an acrylate basis and has carbon nanomaterials and graphite.

5. Use of a heatable coating as part of a lightning protection system of a wind turbine rotor blade, wherein the heatable coating is applied in the form of a paint to a surface of the wind turbine rotor blade and is galvanically coupled to a lightning protection conductor,
wherein the heatable coating (340) is based on an acrylate basis and has carbon nanomaterials and graphite.

## Revendications

1. Pale de rotor d'éolienne (200), avec
une pointe de pale de rotor (210) et une racine de pale de rotor (220) ainsi qu'un système paratonnerre (300),
dans laquelle le système paratonnerre (300) présente un conducteur paratonnerre (310) et un revêtement chauffant (340) sous la forme d'un vernis sur la surface de la pale de rotor (200), dans laquelle le revêtement chauffant (340) est couplé de manière galvanique au conducteur paratonnerre (310),
dans laquelle le revêtement chauffant (340) est à base d'une base d'acrylate et présente des nanomatériaux en carbone et du graphite.

2. Pale de rotor d'éolienne (200) selon la revendication 1, avec en outre
au moins un récepteur de foudre (330),
dans laquelle le revêtement chauffant (340) est prévu dans la zone du récepteur de foudre (330) et le revêtement chauffant (340) est couplé de manière galvanique au conducteur paratonnerre (310) au moyen du récepteur de foudre (330).

3. Pale de rotor d'éolienne (200) selon l'une quelconque des revendications 1 à 2, dans laquelle
l'épaisseur du vernis est comprise entre 30 µm et 2 mm, en particulier entre 40 µm et 1 mm.

4. Procédé de fabrication d'une pale de rotor d'éolienne (200), avec les étapes :
de fabrication d'une coque de la pale de rotor d'éolienne à partir d'un matériau composite à base de fibres,
de prévision d'au moins un conducteur paratonnerre (310),
d'application d'un revêtement chauffant (340) sous la forme d'un vernis sur une surface de la pale de rotor d'éolienne, et
de couplage galvanique du revêtement chauffant (340) à l'au moins un conducteur paratonnerre (310),
dans lequel le revêtement chauffant (340) est à base d'une base d'acrylate et présente des nanomatériaux en carbone et du graphite.

5. Utilisation d'un revêtement chauffant en tant que partie d'un système paratonnerre d'une pale de rotor d'éolienne, dans laquelle le revêtement chauffant est appliqué sous la forme d'un vernis sur une surface de la pale de rotor d'éolienne et est couplé de manière galvanique à un conducteur paratonnerre,
dans laquelle le revêtement chauffant (340) est à base d'une base d'acrylate et présente des nanomatériaux en carbone et du graphite.
